# EUROPEAN PATENT SPECIFICATION

(11) **EP 3 571 043 B1**
(45) Date of publication and mention of the grant of the patent: **20.10.2021**
(21) Application number: 18705726.0
(22) Date of filing: 18.01.2018
(51) Int. Cl.: B32B 5/02, A61G 1/01, A62B 17/00, B32B 5/24, B32B 7/14, B32B 19/02, B32B 27/08, B32B 27/12, B32B 27/20, B32B 27/30, B32B 27/32, B32B 3/26, F16L 59/02, F16L 59/08, A61F 17/00, F16L 59/06

(54) **HEAT-PROTECTIVE SHEET**
WÄRMESCHUTZFOLIE
FEUILLE DE PROTECTION THERMIQUE

(30) Priority: 20.01.2017 IT 201700006234
(43) Date of publication of application: 27.11.2019
(73) Proprietor: Plastik Textile S.p.a., 24061 Albano S. Alessandro (Bergamo) (IT)
(72) Inventor: CATTANEO, Gianangelo, 24061 Albano Sant'Alessandro Bergamo (IT); MARINUCCI, Luca, 24061 Albano Sant'Alessandro Bergamo (IT); MAFFEIS ROMANOWSKA, Agata, 24061 Albano Sant'Alessandro Bergamo (IT); PENNACHIA, Edoardo, 24061 Albano Sant'Alessandro Bergamo (IT)
(74) Representative: Crippa, Paolo Ernesto
(86) International application number: PCT/IB2018/050318
(87) International publication number: WO 2018/134764

(56) References cited:
- EP-A1- 1 816 254
- EP-A2- 1 400 348
- US-A- 5 317 035
- US-A1- 2016 015 157
- US-A1- 2016 046 096

## Description

### Field of the Invention

In its more general aspect the present invention relates to a heat-protective sheet.

In particular, the invention relates to a sheet of the afore said type, in the following also denoted as blanket or cover, used for thermal stabilization preferably but not exclusively of a person (living being), more specifically used as heating sheet.

### State of the Art

In the field of the heat-protective blankets so called isothermal blankets have emerged in recent times, also known as "space blankets", specifically used in rescue operations.

Blankets of the afore mentioned type are used for example to cover a person in case of car crash, rescue at sea, mountain rescue, rescue following an earthquake and like emergency circumstances.

The "space blankets" consist of a polyester sheet metallized on both sides and exhibit in particular a first silver side and a second golden side.

Generally the polyester sheet metallization consists of a thin layer of aluminium for the silver (reflecting) side and an aluminium-copper alloy for the golden side.

In detail, the first silver side basically reflects the solar radiation and generally heat, and is usually facing towards the rescued person in case of hypothermia, or anyway in cases wherein the person has to be heated and the body heat dispersion therefrom has to be avoided.

The golden side allows the transmission of the solar radiation and generally heat instead, and therefore in the afore mentioned case it is facing outwards (heating of the person), or it is facing towards the person in case a cooling effect is desired, for example following a heat stroke.

In this second case the person body heat is dispersed through the second golden side, whereas the first silver side facing outwards prevents the solar radiation and more generally the outer heat from reaching the person.

Generally speaking, the heating use of the "space blankets" is more popular than the cooling use thereof, since collision shocks or however emergency situations cause body cooling phenomena, as well as body cooling occurs in cases wherein a person underwent burns or some type of traumas.

Furthermore, it has to be noted that usually a trauma causes sweating increase in a person, with subsequent further body temperature decrease and, therefore, the need of resorting to the heating use of the "space blankets".

Consequently the cooling use of the "space blankets" is substantially bounded to the infrequent rescue of persons prey to heat strokes.

Although advantageous, heat-protective blankets of the "space blanket" type are not free from drawbacks.

A drawback of the "space blankets" is in their poor handiness, which is essentially due to the stiffness provided by the metallization of the two sides and the nature of the polymer used.

It is therefore difficult to lay out a "space blanket" on a person, since "space blankets" do not swell, so to speak, when outspread, such as a bed sheet or a conventional blanket.

Even more difficult is to wrap a "space blanket" around a person, since "space blankets" become wrinkled and crumple when folded.

Therefore "space blanket" can be said not to be ergonomic, generally speaking about their structure.

Furthermore it has to be considered that "space blankets" do not allow body sweat perspiration. <<_>>

### Summary of the Invention

The technical problem underlying the present invention has been to provide a heat-protective sheet for heating use, specifically but not exclusively of a person, having such structural and functional characteristics to overcome the afore mentioned drawbacks pertaining to the known art.

In accordance with the invention the afore said problem is solved by a heat-protective sheet comprising a first layer and a second layer coupled to one another, wherein the afore said first layer comprises a microporous liquid-proof polymer matrix permeable to water vapor, and the afore said second layer comprises a non-woven fabric made of synthetic fibers, and wherein the afore said first layer and the afore said second layer are not metallized.

The afore said first layer comprises mineral fillers dispersed in the afore said polymer matrix, comprising micro-pores at least next to the afore said mineral fillers, and the afore said mineral fillers comprising particles of calcium carbonate.

Preferably, the afore said first layer comprises a plurality of air pads, the afore said air pads being essentially constituted by not-open cavities distributed in the afore said polymer matrix.

The afore said first layer comprises at least one substance with low-transmittance of the electromagnetic radiation with wavelength from about 7 µm to about 14 µm, preferably a substance with low-transmittance of the afore said electromagnetic radiation and dispersed in the afore said first layer so as to determine, for the afore said sheet, a transmittance equal to or less than about 60%.

Preferably, the afore said at least one low-transmittance substance is dispersed in the afore said polymer matrix, and more preferably is selected from the group comprising ethylene-vinyl acetate copolymers, polymethylmethacrylate, acrylic resins, dispersions of metallic pigments, silica glasses, silica, kaolin and silicates in general.

Preferably, the afore said sheet has overall breathability equal to, or greater than, about 500 g(H₂Ov)/m² per day, more preferably a whole breathability equal to, or greater than, about 1000 g(H₂Ov)/m² per day.

The afore said sheet has whole grammage equal to or lower than about 60 g/m², more preferably equal to or lower than about 50 g/m².

Preferably, the afore said polymer matrix is constituted by polyolefins, preferably polyolefins selected from the group comprising polyethylene, polypropylene and ethylene-propylene copolymers.

Preferably, the afore said synthetic fibers are constituted by polypropylene, polyethylene, or an ethylene-propylene copolymer.

Preferably, the afore said first layer and the afore said second layer are coupled by lamination.

Preferably, the afore said sheet comprises an adhesive agent interposed between the afore said first layer and the afore said second layer, wherein the afore said adhesive agent is preferably non-uniformly distributed, more preferably wherein the afore said adhesive agent is randomly distributed in adhesive micro-points.

Preferably, the sheet according to the invention is constituted by the afore said first layer, the afore said second layer and the afore said adhesive agent.

Preferably, the afore said sheet has width between about 140 cm and about 180 cm and length between about 190 cm and about 230 cm.

Advantageously, the afore said sheet is provided with optimum thermal quality and, in addition, it is ergonomic and handy, soft and breathable, and anyway water-proof and impermeable to biologic liquids that could contact the sheet, specifically in case of use during person rescue operations.

Therefore the present invention also provides a disposable package comprising at least one sheet and preferably only one sheet of the afore said type.

### Brief description of the figures

Further characteristics and advantages of the invention will be more evident by the review of the following description of a preferred, but not exclusive, embodiment disclosed for illustration purposes only and without limitation, with the aid of the attached drawing, wherein:

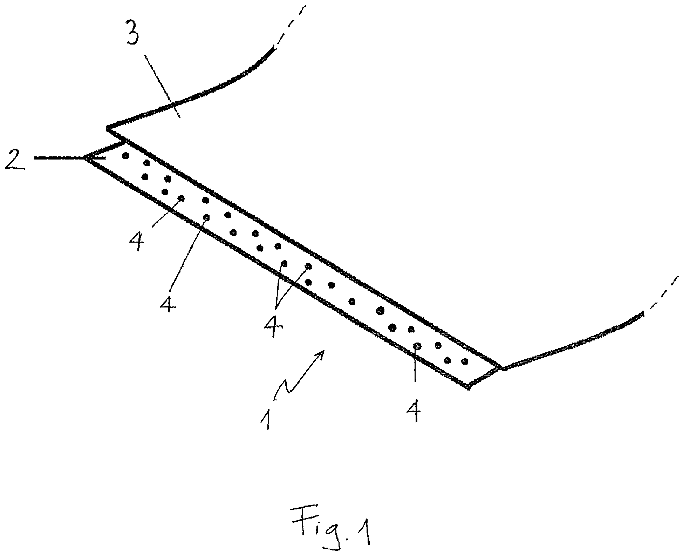

- figure 1 schematically shows a portion of a heat-protective sheet in accordance with the present invention.

### Detailed description of the invention

Figure 1 shows a portion of a heat-protective sheet denoted by **1** in accordance with the present invention.

The sheet **1** essentially comprises a first layer **2** and a second layer **3** coupled to one another, i.e. constrained to one another, whereas in the example of the afore said figure, just to better disclose the invention, the first layer **2** and the second layer **3** are shown not constrained at an end edge of the sheet **1.**

According to the invention, the first layer **2** comprises a micro-porous liquid-proof polymer matrix permeable to water vapor, and the second layer **3** comprises a non-woven fabric made of synthetic fibers.

Furthermore, still according to the invention, the first layer **2** and the second layer **3** are not surface metallized.

In detail, as above mentioned, the polymer matrix of the first layer **2** is micro-porous, liquid-proof and permeable to water vapor, i.e. breathable, and for this purpose, in accordance with the invention, the first layer **2** comprises mineral fillers dispersed in the polymer matrix and micro-pores distributed at least next to the mineral fillers, which mineral fillers comprise or are constituted by particles of calcium carbonate.

Specifically, the micro-pores next to the mineral fillers are obtained through a polymer matrix drawing step carried out before the first later **2** being coupled to the second layer **3,** which determines a lengthening of the same polymer matrix whereas mineral fillers, being substantially inert and stiff, are not drawn nor lengthened.

This different behavior of the polymer matrix and mineral fillers causes micro-cracks in the polymer matrix just next to the particles of mineral fillers, thus making the polymer matrix micro-porous and permeable to water vapor, without impairing the its liquid-proofness.

In the example of figure 1 the mineral fillers and the micro-pores in the polymer matrix of the first layer **2** are not shown.

Still in accordance with a preferred embodiment of the invention, it has to be added that the first layer **2** comprises a plurality of air pads distributed in the polymer matrix, which air pads in practice consist of essentially not-open cavities obtained by one or more expanding additives.

The expanding additives are specific agents known in the known art, that are used in extrusion processes in order to obtain an expanded polymeric material and, in the present case, are added during the making of the polymer matrix, specifically during an extrusion step through which the afore said polymer matrix is obtained.

In the example of figure 1 the air pads in the polymer matrix of the first layer **2** are not shown.

Furthermore in accordance with the invention, it has to be added that the first layer **2** comprises at least one substance with low-transmittance of the electromagnetic radiation with wavelength between about 7 **µm** and about 14 **µm,** more preferably one substance with low-transmittance of the electromagnetic radiation dispersed in the first layer **2** so as to determine, for the afore said sheet, a transmittance equal to, or less than, about 60%.

Preferably, the afore said at least one low-transmittance substance is dispersed in the afore said polymer matrix of the first layer **2,** and more preferably is selected from the group comprising ethylene-vinyl acetate copolymers, polymethylmethacrylate, acrylic resins, dispersions of metallic pigments, silica glasses, silica, kaolin and silicates in general.

Both the air pads, due to low air thermal conductivity, and the low-transmittance substance, due to the capability of reflecting or absorbing infrared electromagnetic radiations, i.e. electromagnetic radiations emitted by a warm body, increase the "thermal quality" of the sheet according to the present invention, in the meaning of the characteristic of decreasing a person body heat dispersion and providing the person with warmth feeling, thus the capability of retaining or blocking the heat emitted by the person and the capability of promoting the solar radiation passing towards the same person.

Still as for the first layer **2,** it has to be added that the polymer matrix is preferably constituted by polyolefins, more preferably polyolefins selected from the group comprising polyethylene, polypropylene and ethylene-propylene copolymers.

Advantageously a polymer matrix constituted by polyolefins allows implementing a first layer **2,** which inter alia is the so-called inner sheet layer i.e. intended for contacting the person using it, remarkably soft and comfortable, thus with considerable reduction of the sheet stiffness with respect to "space blankets" provided in the known art.

As for the second layer **3,** it has to be said that in accordance with a preferred embodiment of the present invention, the afore said synthetic fibers are constituted by polypropylene, polyethylene, or an ethylene-propylene copolymer.

A non-woven fabric made of polypropylene, polyethylene or an ethylene-propylene copolymer fibers advantageously provides the second layer **3,** which in accordance with what afore mentioned is the so-called outer sheet layer i.e. not intended for contacting the person which uses it, with high toughness and tear resistance, in addition to optimum handiness, while concurring to increase the "thermal quality" of the sheet **1.**

It has to be noted that the non-woven fabric of the second layer **3** is also breathable due to random arrangement of the synthetic fibers that can be stratified or crossed each other.

Still in accordance with the invention, preferably the sheet 1 has overall breathability equal to, or greater than, about 500 g(H₂Ov)/m² per day, more preferably overall breathability equal to, or greater than, about 1000 g(H₂Ov)/m² per day, measured by the WSP 70.5(05) method.

Furthermore, in accordance with the invention, the sheet **1** has whole grammage equal to, or lower than, about 60 g/m², more preferably equal to, or lower than, about 50 g/m².

As for the coupling of the first layer **2** to the second layer **3,** it has to be said that it is preferably obtained by lamination.

Furthermore, in accordance with the example of figure 1, the sheet **1** comprises an adhesive agent interposed between the first layer **2** and the second layer **3,** which determines a firm constraint between the two layers and which is preferably non-uniformly distributed.

More preferably the adhesive agent is randomly distributed in micro-points, as shown in the example of figure 1, wherein adhesive micro-points are denoted by **4.**

Advantageously, the adhesive agent is hot distributed according to the afore said random distribution, thus the first layer **2** and the second layer **3** are laminated in order to obtain the sheet **1.**

In this way the breathability of the whole sheet according to the present invention is ensured.

According to a preferred embodiment of the invention, the sheet **1** has width between about 140 cm and about 180 cm and length between about 190 cm and about 230 cm.

In accordance with the example of figure 1, therefore with a preferred embodiment of the present invention, the sheet **1** is constituted by the first layer **2** as afore described, the second layer **3** as afore described, and the adhesive micro-points **4** as afore described, any metalization of the first layer or second layer not being provided, as well as any additional layer not being provided.

In accordance with the invention, a disposable package is also provided, comprising at least one sheet and preferably only one sheet of the afore said type.

The advantages of the present invention, already apparent through the description above, can be summarized by emphasizing that a heat-protective sheet is provided, which is permeable to water vapor and water- and biological fluid-proof (for both the reduced sizes of the micro-pores of the polymer matrix and the high surface tension characterizing water and biological fluids), has high "thermal insulation", high toughness and tear resistance, and still being highly manageable, soft and in practice not stiff, therefore ergonomic.

The present sheet can therefore be easily positioned on, and also wrapped around, a person in need of thermal stabilization.

Finally, it has to be mentioned that the present sheet is the result of simple and cheap implementation.

To the present invention, in the illustrated and described embodiments, in order to satisfy contingent and specific requirements, a person skilled of the art can make a number of variations and changes, on the other hand all contained in the protection scope of the invention as defined by the following claims.

## Claims

1. Heat-protective sheet (1) comprising a first layer (2) and a second layer (3) coupled to one another, wherein said first layer (2) comprises a microporous liquid-proof polymer matrix permeable to water vapor, and said second layer (3) comprises a non-woven fabric made of synthetic fibers, wherein said first layer (2) and said second layer (3) are not metallized, wherein said first layer (2) comprises mineral fillers dispersed in said polymer matrix, said polymer matrix comprising micro-pores at least next to said mineral fillers, said mineral fillers comprising particles of calcium carbonate, **characterised in that** said first layer (2) comprises at least one substance with low-transmittance of the electromagnetic radiation with wavelength from about 7 µm and about 14 µm, wherein said sheet (1) has a whole grammage equal to, or lower than, 60 g/m2.

2. Sheet according to claim 1, wherein said first layer (2) comprises a plurality of air pads, said air pads being essentially constituted by not-open cavities distributed in said polymer matrix.

3. Sheet according to any one of the preceding claims, wherein the substance with low-transmittance of the said electromagnetic radiation is dispersed in said first layer so that to determine for said sheet transmittance equal to or less than about 60%.

4. Sheet according to claim 1, wherein said at least one low-transmittance substance is dispersed in said polymer matrix, said at least one low-transmittance substance being preferably selected from the group comprising ethylene-vinyl acetate copolymers, polymethylmethacrylate, acrylic resins, dispersions of metallic pigments, silica glasses, silica, kaolin and silicates in general.

5. Sheet according to any one of the preceding claims, having an overall breathability equal to, or greater than, 500 g(H2Ov)/m2 per day.

6. Sheet according to any one of the preceding claims, having an overall breathability equal to, or greater than, 1000 g(H2Ov)/m2 per day.

7. Sheet according to any one of the preceding claims, having a whole grammage equal to, or lower than, about 50 g/m2.

8. Sheet according to any one of the preceding claims, wherein said polymer matrix is constituted by polyolefins, preferably polyolefins selected from the group comprising polyethylene, polypropylene and ethylene-propylene copolymers.

9. Sheet according to any one of the preceding claims, wherein said synthetic fibers are constituted by polypropylene, polyethylene, or an ethylene-propylene copolymer.

10. Sheet according to any one of the preceding claims, wherein said first layer (2) and said second layer (3) are coupled by lamination.

11. Sheet according to any one of the preceding claims, comprising an adhesive agent interposed between said first layer (2) and said second layer (3), wherein said adhesive agent is non-uniformly distributed.

12. Sheet according to the preceding claim, wherein said adhesive agent is randomly distributed in adhesive micro-points (4).

13. Sheet according to claim 11, consisting of said first layer (2) said second layer (3) and said adhesive agent.

14. Use of a sheet according to any one of claims 1-13 for the heat-protection of a person, wherein said sheet has width between 140 cm and 180 cm and length between 190 cm and 230 cm.

15. Disposable packaging comprising at least one sheet, and preferably only one sheet, according to any one of the preceding claims.

## Patentansprüche

1. Wärmeschutzfolie (1), umfassend eine erste Schicht (2) und eine zweite Schicht (3), die miteinander verbunden sind, wobei die erste Schicht (2) eine mikroporöse flüssigkeitsdichte Polymermatrix umfasst, die für Wasserdampf durchlässig ist, und die zweite Schicht (3) einen Vliesstoff aus synthetischen Fasern umfasst, wobei die erste Schicht (2) und die zweite Schicht (3) nicht metallisiert sind, wobei die erste Schicht (2) mineralische Füllstoffe umfasst, die in der Polymermatrix dispergiert sind, wobei die Polymermatrix Mikroporen zumindest in der Nähe der mineralischen Füllstoffe umfasst, wobei die mineralischen Füllstoffe Calciumcarbonat-Partikel umfassen, **dadurch gekennzeichnet, dass** die erste Schicht (2) mindestens eine Substanz mit geringer Durchlässigkeit für elektromagnetische Strahlung mit einer Wellenlänge von etwa 7 µm und etwa 14 µm umfasst, wobei die Folie (1) ein Gesamtflächengewicht von 60 g / m2 oder weniger aufweist.

2. Folie nach Anspruch 1, wobei die erste Schicht (2) eine Vielzahl von Luftpolstern umfasst, wobei die Luftpolster im Wesentlichen durch nicht offene Hohlräume gebildet werden, die in der Polymermatrix verteilt sind.

3. Folie nach einem der vorhergehenden Ansprüche, wobei die Substanz mit geringer Durchlässigkeit für die elektromagnetische Strahlung in der ersten Schicht so dispergiert ist, dass für die Folie eine Durchlässigkeit von etwa 60% oder weniger bestimmt wird.

4. Folie nach Anspruch 1, wobei die mindestens eine Substanz mit geringer Durchlässigkeit in der Polymermatrix dispergiert ist, wobei die mindestens eine Substanz mit geringer Durchlässigkeit vorzugsweise aus der Gruppe ausgewählt ist, die Ethylen-Vinylacetat-Copolymere, Polymethylmethacrylat, Acrylharze, Dispersionen von Metallpigmenten, Quarzgläser, Silica, Kaolin und Silikate im Allgemeinen umfasst.

5. Folie nach einem der vorhergehenden Ansprüche, welche eine Gesamtatmungsaktivität von 500 g (H2Ov) / m2 pro Tag oder mehr aufweist.

6. Folie nach einem der vorhergehenden Ansprüche, welche eine Gesamtatmungsaktivität von 1000 g (H2Ov) / m2 pro Tag oder mehr aufweist.

7. Folie nach einem der vorhergehenden Ansprüche, welche ein Gesamtflächengewicht von etwa 50 g / m2 oder weniger aufweist.

8. Folie nach einem der vorhergehenden Ansprüche, wobei die Polymermatrix aus Polyolefinen gebildet ist, vorzugsweise aus Polyolefinen, ausgewählt aus der Gruppe, die Polyethylen, Polypropylen und Ethylen-Propylen-Copolymere umfasst.

9. Folie nach einem der vorhergehenden Ansprüche, wobei die synthetischen Fasern aus Polypropylen, Polyethylen oder einem Ethylen-Propylen-Copolymer gebildet sind.

10. Folie nach einem der vorhergehenden Ansprüche, wobei die erste Schicht (2) und die zweite Schicht (3) durch Laminierung verbunden sind.

11. Folie nach einem der vorhergehenden Ansprüche, welche einen Klebstoff zwischen der ersten Schicht (2) und der zweiten Schicht (3) umfasst, wobei der Klebstoff nicht einheitlich verteilt ist.

12. Folie nach dem vorhergehenden Anspruch, wobei der Klebstoff zufällig in klebenden Mikropunkten (4) verteilt ist.

13. Folie nach Anspruch 11, welche aus der ersten Schicht (2), der zweiten Schicht (3) und dem Klebstoff besteht.

14. Verwendung einer Folie nach einem der Ansprüche 1 bis 13 zum Wärmeschutz einer Person, wobei die Folie eine Breite zwischen 140 cm und 180 cm und eine Länge zwischen 190 cm und 230 cm aufweist.

15. Einwegverpackung, umfassend mindestens eine Folie und vorzugsweise nur eine Folie nach einem der vorhergehenden Ansprüche.

## Revendications

1. Feuille de protection thermique (1) comprenant une première couche (2) et une seconde couche (3) couplées l'une à l'autre, dans laquelle ladite première couche (2) comprend une matrice polymère microporeuse étanche aux liquides, perméable à la vapeur d'eau, et ladite seconde couche (3) comprend un tissu non tissé constitué de fibres synthétiques, dans laquelle ladite première couche (2) et ladite seconde couche (3) ne sont pas métallisées, dans laquelle ladite première couche (2) comprend des charges minérales dispersées dans ladite matrice polymère, ladite matrice polymère comprenant des micropores au moins à côté desdites charges minérales, lesdites charges minérales comprenant des particules de carbonate de calcium, **caractérisée en ce que** ladite première couche (2) comprend au moins une substance à faible transmittance du rayonnement électromagnétique ayant une longueur d'onde d'environ 7 µm et d'environ 14 µm, dans laquelle ladite feuille (1) a un grammage total égal ou inférieur à 60 g/m2.

2. Feuille selon la revendication 1, dans laquelle ladite première couche (2) comprend une pluralité de coussins d'air, lesdits coussins d'air étant essentiellement constitués de cavités non ouvertes réparties dans ladite matrice polymère.

3. Feuille selon l'une quelconque des revendications précédentes, dans laquelle la substance à faible transmittance dudit rayonnement électromagnétique est dispersée dans ladite première couche de manière à établir pour ladite feuille une transmittance égale ou inférieure à environ 60 %.

4. Feuille selon la revendication 1, dans laquelle ladite au moins une substance à faible transmittance est dispersée dans ladite matrice polymère, ladite au moins une substance à faible transmittance étant de préférence choisie dans le groupe comprenant les copolymères éthylène-acétate de vinyle, polyméthacrylate de méthyle, résines acryliques, dispersions de pigments métalliques, verres de silice, silice, kaolin et silicates en général.

5. Feuille selon l'une quelconque des revendications précédentes, ayant une respirabilité globale égale ou supérieure à 500 g(H2Ov)/m2 par jour.

6. Feuille selon l'une quelconque des revendications précédentes, ayant une respirabilité globale égale ou supérieure à 1 000 g(H2Ov)/m2 par jour.

7. Feuille selon l'une quelconque des revendications précédentes, ayant un grammage total égal ou inférieur à environ 50 g/m2.

8. Feuille selon l'une quelconque des revendications précédentes, dans laquelle ladite matrice polymère est constituée de polyoléfines, de préférence de polyoléfines choisies dans le groupe comprenant les polyéthylène, polypropylène et copolymères éthylène-propylène.

9. Feuille selon l'une quelconque des revendications précédentes, dans laquelle lesdites fibres synthétiques sont constituées de polypropylène, polyéthylène, ou d'un copolymère éthylène-propylène.

10. Feuille selon l'une quelconque des revendications précédentes, dans laquelle ladite première couche (2) et ladite deuxième couche (3) sont couplées par laminage.

11. Feuille selon l'une quelconque des revendications précédentes, comprenant un agent adhésif interposé entre ladite première couche (2) et ladite seconde couche (3), dans laquelle ledit agent adhésif est réparti de manière non uniforme.

12. Feuille selon la revendication précédente, dans laquelle ledit agent adhésif est réparti aléatoirement en micro-points adhésifs (4).

13. Feuille selon la revendication 11, constituée de ladite première couche (2), de ladite seconde couche (3) et dudit agent adhésif.

14. Utilisation d'une feuille selon l'une quelconque des revendications 1 à 13 pour la protection thermique d'une personne, dans laquelle ladite feuille a une largeur comprise entre 140 cm et 180 cm et une longueur comprise entre 190 cm et 230 cm.

15. Emballage jetable comprenant au moins une feuille, et de préférence une seule feuille, selon l'une quelconque des revendications précédentes.
